# EUROPEAN PATENT APPLICATION

(11) **EP 4 403 404 A1**
(43) Date of publication of application: **24.07.2024**
(21) Application number: 23157202.5
(22) Date of filing: 17.02.2023
(51) Int. Cl.: B60L 50/15

(54) **MANEUVERING DRIVE SYSTEM, VEHICLE AND METHOD FOR CONTROLLING A MANEUVERING DRIVE SYSTEM**

(30) Priority: 17.01.2023 CN 202310092737
(71) Applicant: Carman Enterprise Co., Ltd, Hangzhou 311121 (CN)
(72) Inventor: Zhao, Quansheng, Hangzhou, 311121 (CN)
(74) Representative: Paul & Albrecht Patentanwälte PartG mbB

(57) **Abstract**

The present invention relates to a maneuvering drive system (3) for a vehicle, in particular for a vehicle without its own drive, preferably for a trailer, comprising at least two, in particular exactly two drive units (4), which are designed to be attached to a vehicle in order to drive a wheel (2) of the vehicle, each drive unit (4) comprising
a rotatably mounted drive element, which is designed and arranged such that it can be brought into abutment with a wheel (2) of the vehicle to drive the vehicle,
an electrical drive motor (10) designed to set the drive element in rotation and having a plurality of conductors,
wherein at least one control device (23) is provided, which control device (23) is arranged and designed such that it controls the speed and direction of rotation of the rotor of at least one drive motor (10) assigned thereto.

## Description

The present invention relates to a maneuvering drive system for a vehicle, in particular for a vehicle without its own drive, preferably for a trailer, comprising at least two, in particular exactly two drive units, which are designed to be attached to a vehicle in order to drive a wheel of the vehicle, each drive unit comprising a rotatably mounted drive element, which is designed and arranged such that it can be brought into abutment with a wheel of the vehicle to drive the vehicle, an electrical drive motor designed to set the drive element in rotation and having a plurality of conductors, wherein at least one control device is provided, which control device is arranged and designed such that it controls the speed and direction of rotation of the rotor of at least one drive motor assigned thereto.

Furthermore, the present invention relates to a vehicle, in particular a vehicle without its own drive. In addition, the invention relates to a method for controlling a maneuvering drive system.

Vehicles without their own drive may, for example, be trailers such as caravans, boat trailers, horse trailers or the like. In the case of such vehicles, it is considered problematic that they can only be moved with difficulty by hand when they are not connected to the towing vehicle, for example a passenger car. In the case of a caravan trailer, for example, which has been disconnected from the car by which it was transported at a suitable point on a camp site, maneuvering by hand to the final parking position is very difficult.

In order to facilitate maneuvering in the disconnected state, maneuvering drive systems have been developed which can be mounted on a vehicle without its own drive. Such a maneuvering drive system usually comprises at least two drive units by means of which the wheels of the vehicle to be moved can be set in rotation. The drive units are mounted on the outside of a vehicle, usually in an area immediately in front of or behind the wheels which are to be driven by the drive units. The drive units each comprise on their front side a rotatable drive element, for example a friction wheel which is brought into frictional contact with a wheel of the vehicle, so that rotation of the drive element causes rotation of the wheel of the vehicle. Each drive element is assigned an electrical drive motor, which is coupled to the drive element and is able to set the drive element into rotation.

If, in the case of a single-axle vehicle, such a drive unit is mounted in the area of each of the two wheels or, in the case of a two-axle or multi-axle vehicle, such a drive unit is mounted in the area of each wheel of at least one of the axles, the vehicle can be comfortably moved by a user using the drive units.

Even if such drive units have proven its worth in principle, there is always the need to design the drive unit in a more efficient, energy-, weight- and space-saving way.

Based on this prior art, it is an object of the present invention to provide an alternative maneuvering drive system, which is particularly efficient and space-saving.

Preferably, this object is solved in an maneuvering drive system mentioned at the beginning, wherein no sensor elements, such as hall-sensors, which are designed and arranged to direct directly the current position of the rotors of the drive motors, are provided.

In other words, there is no need to measure directly the position of the external rotor. A sensor element, which is designed and arranged to detect directly the position of the external rotor, is understood to be a sensor that is located in direct proximity to the rotor and interacts directly with rotating parts of the rotor. In the prior art, very often hall-sensors are used, which detect a magnetic flux and thus the current position of the rotor. Another example for sensors, which can detect directly the position of the rotor, are optical sensors, which detect the position of the rotor via an optical signal. Accordingly, the method according to the invention can be characterized in that no sensor elements, such as hall- sensors, are used to detect directly the current position of the rotors of the drive motors.

The control device may be arranged and designed such that it controls the speed and direction of rotation of the rotor of at least one drive motor assigned thereto depending on at least one electrical parameter, in particular exactly one electrical parameter, preferably the voltage or current, in the conductors of the assigned drive motor(s) measured when the drive motor(s) is/are in operation. Furthermore, the method according to the invention can be characterized in that each control device measures an electrical parameter, preferably the voltage or current in the conductors of the assigned drive motor(s), when the drive motor is in operation, and controls the speed and direction of rotation of the rotor(s) depending on the measured parameter.

This embodiment is based on the consideration to use a brushless motor having a simple and thus cost-effective design. An external rotor is advantageous in that it has a larger torque-volume ratio such that the motor can be designed smaller in size compared with a motor having an internal rotor. The drive motor, which is in particular a DC-motor, comprises several conductors, on each of which a specific voltage can be applied by the control device. The conductors may form windings in order to increase the efficiency. In this context, the conductor is an electrical conductor, preferably comprising or consisting of a metal or a metal alloy, in particular copper or a copper alloy or an electrical steel or another suitable electrically conductive material.

In particular, each drive motor is a 3-phase-motor. In this case, there are three conductors to which a specific voltage can be applied independent from the voltage applied to the other conductors. By subsequently applying a specific voltage on each of the conductors, they can interact with a magnetic field such that an electromagnetic force extending perpendicularly to the magnetic field is created so that the rotor is set in rotation. In order to create such a magnetic field, each drive motor may comprise at least one magnetic element, in particular permanent magnet(s) or electric magnet(s). Preferably, the magnetic element(s) is/ are mounted to or is/ are part of the rotors of the drive motors. It is principally also conceivable that the drive motors have another number of conductors, for example 4, 6 or 9 conductors.

A positive voltage and a negative voltage are subsequently applied to the conductors. In case of a 3-phase-motor, in any moment, a negative voltage is applied to one conductor, a positive voltage is applied to another conductor and no voltage is applied to the third conductor, which has a floating potential. The distribution of the positive voltage, negative voltage and floating potential to the conductors changes regularly during a rotation in order to achieve a continuous rotation of the external rotor. This regular change is also referred to as commutation. The commutation must take place at a defined moment in order to achieve a continuous rotation of the rotor relative to the stator. By changing the frequency of commutation, the speed of rotation of the rotor can be adapted and controlled. Accordingly, the invention is based on the consideration not to determine the point of commutation by measuring the position of the rotor, but to conclude from a measurement of an operation parameter, preferably an electrical or magnetic parameter, to the point of commutation.

In concrete terms, each control device may be arranged and designed to detect the zero-crossing of the voltage given in the conductor, in which at the respective moment no voltage is applied, of the assigned drive motor(s) in order to control speed and direction of the rotation of the rotor(s) of the assigned drive motor(s). Accordingly, the method according to the invention may be characterized in that the control device detects the zero-crossing of the potential given in the conductor, in which at the respective moment no voltage is applied, and controls the direction and speed of rotation of the rotor(s) of the assigned drive motor(s) based on this measurement.

For example, at the period when a positive voltage is applied to one of three conductors and a negative voltage is applied to another conductor, a floating voltage or potential exists in the third conductor. In this period, the voltage in the third conductor changes from a positive to a negative voltage, or vice versa. From the point, when the voltage/current is zero (zero-crossing), the control device can conclude/determine the point when the next commutation must take place. This allows a very cost and space-saving design of the drive motors.

Preferably, the drive motors are brushless motors and/or have external rotors. An external rotor leads to a high power-to-weight ratio and a brushless motor allows a very reliable operation of the respective drive motor.

According to a preferred embodiment, the control device comprises a pre-processing unit, which is able to measure the voltage given in the conductors of the drive motor, in particular the voltage given in the conductor of the drive motor, at which at the respective moment no voltage is applied, and creates an output signal, in particular a digital output signal, dependent on the measured voltage. Accordingly, each control device may comprise a pre-processing unit, which measures the voltage/current given in at least one conductor of the assigned drive motor(s) and emits an output signal, in particular a digital output signal, dependent on the measured voltage/ current. This means that at least the respective, in particular each conductor can be electrically connected to the pre-processing unit. The pre-processing unit is able to detect the point when the voltage or current in the conductor is zero. Based on this, the pre-processing unit can give an output signal, in particular a digital output signal.

More in detail, the pre-processing unit may comprise a comparator, in particular a voltage comparator, having at least three input connections for input signals and at least three output connections for in particular digital output signals. Such comparators are commercially available and allow an efficient and space-saving design of the pre-processing unit. The comparator may be electrically connected to the conductors. A comparator is characterized in that it is able to compare two voltages with one another and to give an in particular digital output signal when one of the two measured potentials is higher than the other one. Accordingly, in order to detect the zero- crossing, a reference signal having a zero-potential can be connected to the comparator.

Accordingly, the method according to the invention can be characterized in that each control device comprises a pre- processing unit, which measures the voltage/current given in at least one conductor of the assigned drive motor(s) and emits an output signal, in particular a digital output signal, depending on the measured voltage/current.

Preferably, the control device comprises a main processing unit, which is able to receive a signal indicating an operation parameter, in particular indicating an electrical parameter, preferably indicating the voltage given in the conductors of the drive motors, more preferably indicating the zero-crossing of the voltage and to create, based on the signal, an output signal by means of which the rotational movement of the rotor can be influenced and/or controlled. Accordingly, the main processing unit serves to operate a signal, which indicates an operation parameter and, based on this, controls and/or influences the rotational movement of the rotor, for example increasing or reducing the rotational speed or changing the direction of rotation. For this purpose, the main processing unit can be electrically connected to output connections of the pre-processing unit so that the control of the drive motor is realized based on the output signals given by the pre-processing unit. The output signal of the main processing unit may be an analog signal or a digital signal, in particular a pulsed signal, wherein the frequency of the pulsed signal may determine the commutation of the conductors. The frequency and/or the amplitude of a pulsed output signal can be varied. The inventive method can be characterized in that each control device comprises a main processing unit, which receives a signal indicating an operation parameter, in particular a signal indicating the voltage/current given in the conductors of the drive motor, preferably indicating the zero-crossing of the voltage or current, and creates - based on this signal - an output signal which influences and/or controls the rotational movement of the rotor. Preferably, the main processing unit emits a digital output signal, in particular a pulsed signal, in order to control the drive motor.

Furthermore, the main processing unit may be designed to receive an input signal from a human machine interface, in particular from a handset, preferably from a remote handset, and to process this input signal. In other words, the main processing unit does not only process the input signals given from the pre-processing unit, but also input signals given from a human machine interface. By means of such a human machine interface, the operator can control the movement of the drive motor and thus of the vehicle to be driven. Consequently, the maneuvering drive system can further comprise a human machine interface, in particular a handset, preferably a remote handset. The remote handset can be designed to communicate with the main processing unit or a communication module of the control device via a Bluetooth connection, an infrared-connection or a WLAN-connection.

In concrete terms, the main processing unit may comprise a main chip. This main chip may be a 32 bit chip or a 64 bit chip. The main chip may have clock frequency of less than 100 MHz, in particular of less than 60 MHz, and/or of more than 1 MHz, in particular of more than 5 MHz, preferably of more than 25 MHz. More preferably, the main chip may have a clock frequency of 48 MHz. In order to store a software program, the main chip may have a flash memory of more than 60 kB and/or of less than 256 kB. Such parameters correspond to commercially available chips, which can be used for the present control tasks.

The main chip may be arranged and designed such that it can emit a digital signal in order to control the drive motor. As figured out above, the digital output signal can be a pulsed signal in order to amend the amplitude of the supply voltage to the drive motor and the frequency of the commutation.

In order to transmit the signal to the motor, the control device may further comprise a transistor, in particular a field effect transistor, preferably a metal oxide semiconductor field effect transistor (MOSFET), which is designed and arranged to adapt the input supply voltage, in particular a pulsed supply voltage, of the drive motor based on a signal, in particular a digital signal, received from the main processing unit. Accordingly, each control device may further comprise a transistor, in particular a field effect transistor, preferably a metal oxide semiconductor field effect transistor (MOSFET), which adapts the input supply voltage, in particular a pulsed supply voltage of the drive motor(s) assigned thereto based on a signal, in particular a digital signal, preferably received from the main processing unit. In other words, the transistor may be used to deliver a supply voltage to the drive motor. By means of such a transistor, a relatively high power supply can be delivered to the drive motor controlled and switched by a relatively low power signal received from the main processing unit. In particular, the commutation between the phases can be realized via such a transistor, which commonly has a low reaction time thus allowing a high switch frequency. The transistor may have, assigned to each drive motor, at least three electrical switching devices, which allow to switch the three conductors of the respective drive motor independent from each other thus realizing the commutation.

According to a preferred embodiment, the maneuvering drive system further comprises at least one battery, which is in particular designed to be rechargeable, for supplying the system with electrical energy. It is possible that one battery is provided, which supplies all drive units with electrical energy. It is also possible, that a separate battery is assigned to each drive unit.

Preferably, the battery/ batteries is/are designed to supply an electrical voltage for operation of the drive motor of more than 12 Volt, in particular an electrical voltage of 24 Volt, 36 Volt or 48 Volt. This embodiment is based on the consideration to provide a battery that delivers a voltage of more than 12 Volt, and, correspondingly, to provide drive motors that can be operated at such an electrical voltage. In this way, it is possible to increase the output power of the motor and/or to design the drive units in a very space-saving way. In concrete terms, the power loss in cables is dependent from the electrical current, the length of the cables and the specific resistance determined by the material of the cable. Power losses appear in all cables between the battery, the control device and the motor itself. As a higher electrical voltage leads to a reduced electrical current, the power losses are significantly reduced by a voltage of more than 12 Volt, so that, at the same input power, the output power of the drive motor is significantly increased.

It has been proven in particular advantageous if the electrical voltage supplied by the battery and used for operation of the drive motor is 36 Volt. On one hand, such a voltage is not dangerous for the human body when a person comes accidentally into contact with a non-isolated component. On the other hand, such a voltage leads to a significant reduction in power losses compared to a common voltage of 12 Volt. In particular, the combination of providing a brushless motor having an external rotor at an increased voltage leads to a very space-saving, highly efficient and long service life functioning.

According to a preferred embodiment, the control device and the battery are integrated into one common housing. In other words, each drive unit may comprise a housing, which is in particular weather-resistant and/or water tight, wherein said housing surrounds at least the drive motor and accommodates the battery.

According to a preferred embodiment, each drive motor may define a motor axis, which extends transversally, in particular perpendicularly to the rotation axis of the drive element. Accordingly, the drive motor may be arranged such that its motor axis extends transversally, in particular perpendicularly with regard to the rotation axis of the drive element. When mounted to a vehicle, the rotation axis of the drive element extends normally parallel to the rotation axis of the wheel to be driven by the drive element. This means, that the motor axis may extend in the longitudinal direction of the vehicle to be driven. In this way, a very simple design of the drive unit is possible.

In concrete terms, the drive unit may comprise a central support element on which the drive element is mounted rotatably. This central support element may have a C- or E-shape, wherein the drive element is mounted between two legs of the C- or E-shaped central support element. Accordingly, the drive motor may be connected to a central base section of the central support element, in particular may be flanged thereto. Such a central support element allows a space-saving design and a fast assembly of the drive unit.

According to a preferred elaboration of the invention, the motor may comprise a motor shaft, which is coupled to the drive element by means of a gear device. Such a gear device allows a suitable transmission ratio between the speed of rotation of the motor shaft and the desired speed of rotation of the drive element.

Preferably, the gear device comprises a worm gear pair. By means of a such a worm gear pair, high transmission ratios can be achieved. In particular, it is possible that the motor rotates at a high speed delivering only a low momentum, which is converted into a low speed and a high momentum of the driving element, that is used to drive the wheel of a vehicle. A worm gear pair is characterized in that it comprises a worm, which is in the form of a screw, and a worm wheel, which is in engagement with the worm screw. An important advantage of a worm gear pair is that it has a self-locking effect. Accordingly, it is possible that the worm screw drives the worm wheel, but it is excluded, that the worm wheel can drive the worm screw. Contrary to classical spur gears, an electronic magnetic break need not be provided in a worm gear pair. Furthermore, the noise level is reduced.

In concrete terms, a worm screw of the worm gear pair may be connected to the motor shaft in a rotationally fixed manner or formed in a single piece design with the motor shaft. Accordingly, a high rotation speed of the motor is converted in a low speed of the worm wheel, wherein the motor can be designed such that it delivers only a low momentum which is converted into a high momentum of the worm wheel.

In a further elaboration of this embodiment, the gear device may comprise an intermediate shaft, which is mounted rotatably and which carries a worm wheel being in engagement with the worm shaft and a gear wheel in a rotationally fixed manner. Accordingly, it is provided that the worm wheel being in engagement with the worm shaft is not directly connected to the drive element in a rotationally fixed manner. Moreover, it may be provided that an intermediate shaft is held rotatably, in particular on a central support element, which intermediate shaft carries the worm wheel and a further gear wheel in a rotationally fixed manner to each other. Accordingly, a further gear stage may be provided.

In concrete terms, the gear device may comprise a spur gear stage. Such a further spur gear stage in addition to a worm gear pair may increase the transmission ratio of the gear device in total. Preferably, the spur gear stage as well as the worm gear pair may be arranged between two legs of the central support element. In particular, the gear device may be surrounded completely by the central support element and further cover elements in order to protect the gear device against external influences and to bring the different wheels of the gear device into contact with lubricant.

The spur gear stage may be formed such that the gear wheel of the intermediate shaft is in direct or indirect engagement with an output side gear wheel, which is fixed in a rotationally fixed manner to the drive element. In other words, the gear wheel of the intermediate shaft may be coupled to the drive element directly or indirectly. Preferably, the spur gear stage comprises an intermediate gear wheel held rotatably and arranged between the gear wheel on the intermediate shaft and the output side gear wheel. This embodiment is based on the consideration to realize an indirect coupling between the intermediate shaft and the drive element. In order to increase the transmission ratio, the number of teeth of the output side gear wheel can be higher than the number of teeth of the gear wheel of the intermediate shaft. In particular, the number of teeth of the output side gear wheel can be at least 2 times, in particular at least 2.5 times, preferably at least 3 times the number of teeth of the gear wheel of the intermediate shaft. In this way, the momentum which can be applied to the wheel, is increased, whereas the rotation speed of the drive element is reduced compared to the intermediate shaft.

According to a preferred embodiment of the invention, one control device is assigned to each drive motor. In other words, each drive unit may be controlled by its own control device. In this case, the control device may be arranged directly adjacent to the battery so that the cables between the battery and the control device are short, which keeps the power losses in these cables low. Alternatively, it is also conceivable that one control device is assigned to a plurality of drive motors, in particular to all drive motors. In this configuration, one central control device is provided by means of which the entire drive system can be controlled. Each control device may have a communication module.

In case that a plurality of control devices is provided, the maneuvering drive system may be arranged such that one human machine interface, in particular in the form of a remote handset, is able to communicate with a plurality of control devices at the same time. Accordingly, a direct communication path can be established between one human machine interface and the control devices of all, in particular both drive units. Such an arrangement leads to only a low delay during communication. However, such an arrangement is more complex for maintenance and problem tracking as the control devices of both drive units have their own receiving and controlling parts.

Alternatively, the control device assigned to one drive unit may be formed as a master control device, which is able to communicate with a human machine interface, and the control device(s) assigned to the other drive units is/are formed as slave control device(s) so that it is/they are able to communicate with the master control device in order to get instructions from the latter. In other words, the control device assigned to one drive unit serves as a master control device and the control device assigned to the other drive unit serves as a slave device. Accordingly, a communication signal from a human machine interface is at first transmitted to the master control device and from the master control device to the slave device/ devices. This design allows to use a Bluetooth connection between the human machine interface and the master control device. The maneuvering drive system may comprise a human machine interface, in particular in the form of a handset, preferably in the form of a remote handset, which is able to communicate with one or a plurality of control devices of drive units.

The object is also solved by a vehicle, in particular a vehicle without its own drive, comprising a maneuvering drive system according to the invention.

Further features and advantages of the present invention will become clear by the following description of an embodiment of a maneuvering drive system according to the invention with reference to the enclosed drawing. In the drawing shows:
- Figure 1: a caravan trailer with a first embodiment of a mounted maneuvering drive system according to the invention in a perspective view;

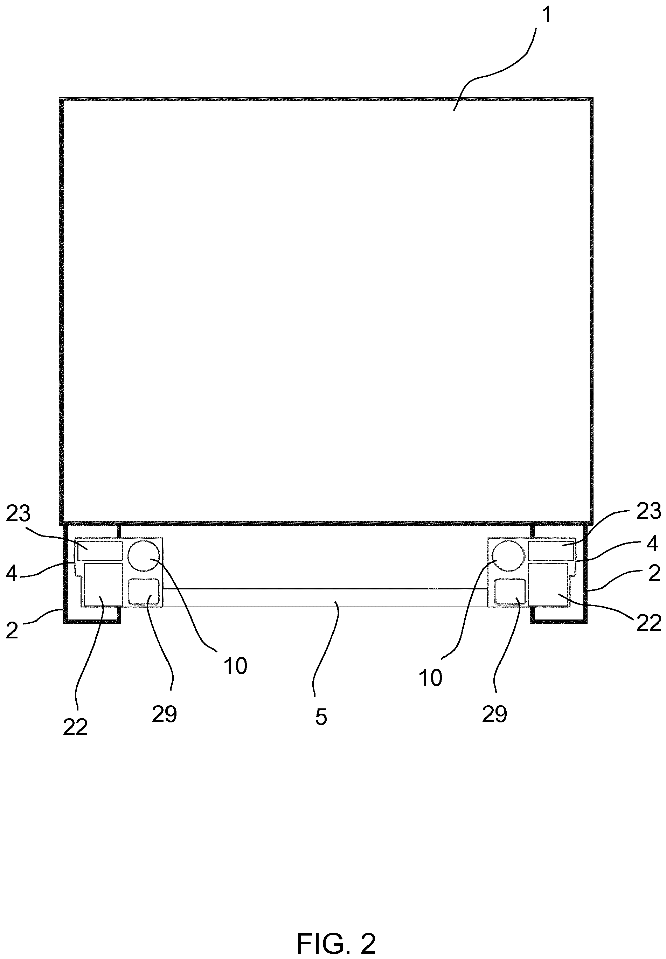

- Figure 2: the caravan trailer of figure 1 in a rear schematical view;
- Figure 3: a drive unit of the first embodiment of a maneuvering drive system according to the invention in a perspective view;
- Figure 4: the drive unit of figure 3 in another perspective view without housing;
- Figure 5: the drive unit in shown in figure 4 without housing in another perspective view;
- Figure 6: the functioning of the control device of the first embodiment of the maneuvering drive system according to the invention;
- Figure 7: a caravan trailer with a second embodiment of amounted maneuvering drive system according to the invention in a perspective view;
- Figure 8: the caravan trailer of figure 7 in a rear schematical view;
- Figure 9: a drive unit of the second embodiment of a maneuvering drive system according to the invention in a perspective view;
- Figure 10: The drive unit of figure 9 in another perspective view without housing; and
- Figure 11: the drive unit shown in figure 10 without housing in another perspective view.

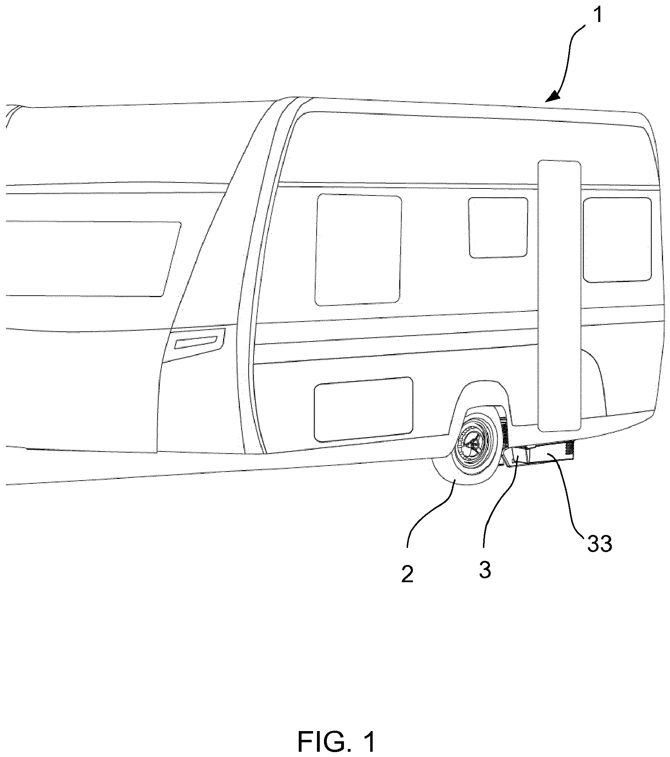

Figure 1 shows a part of a single-axle caravan trailer 1 having two wheels 2 on opposite lateral sides. At its front end, the caravan trailer 1 comprises a coupling device (not visible) in order to attach the trailer 1 to the trailer hitch of a vehicle. The caravan trailer 1 does not have its own drive and, when it is not connected to a passenger car serving as a towing vehicle, can hardly be moved by hand, in particular can hardly be maneuvered. Therefore, the caravan trailer 1 is equipped with a maneuvering drive system 3 according to the invention.

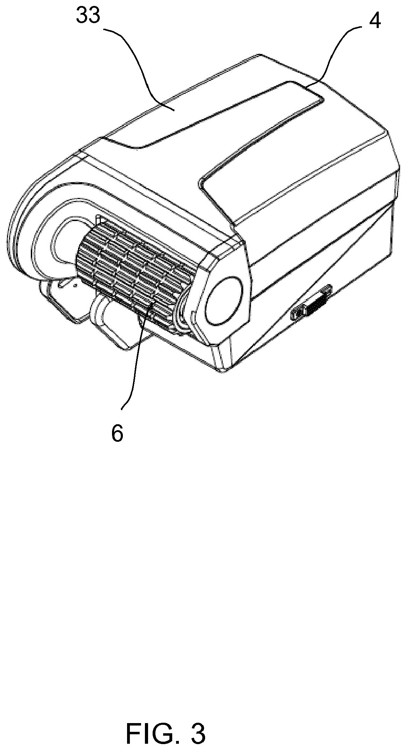

The maneuvering drive system 3 comprises exactly two drive units 4, which are shown more in detail in figures 3 to 5. The drive units 4 are attached to a square tube 5, which connects the two drive units 4 and which is attached to the caravan trailer 1 by means of suitable clamping elements (not visible). The length of the square tube 5 is chosen such that each drive unit 4 is arranged directly behind a wheel 2 of the caravan trailer 1.

By means of the two drive units 4, the wheels 2 of the caravan trailer 1 can be driven and, consequently, the caravan trailer 1 can be moved, in particular maneuvered, without a towing vehicle. For this purpose, each of the drive units 4 comprises a rotatably mounted drive element, specifically a friction roller 6, which is designed and arranged such that it can be brought into abutment with a wheel 2 of the caravan trailer 1 in order to drive the latter. The friction roller 6 has a basically cylindrical shape and comprises in its outer circumference several grooves extending in the longitudinal direction of the friction roller 6.

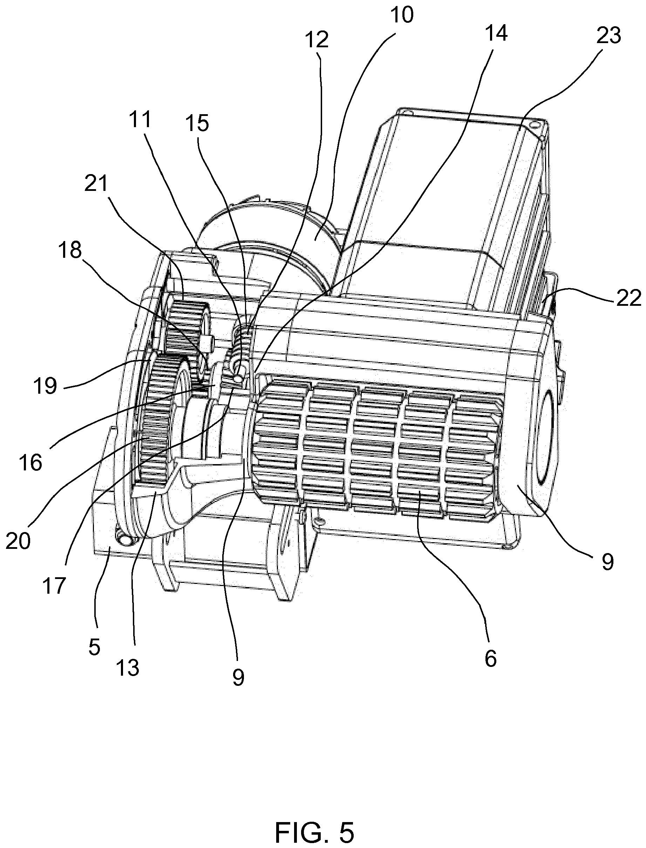

As it is in particular visible in figure 5, each drive unit 4 comprises a central support element 7 having a base section 8 extending parallel to the rotation axis of the friction roller 6 and two legs 9 projecting frontwards from the base section 8. The friction roller 6 is mounted rotatably between the two legs 9.

Furthermore, each drive unit 4 comprises an electrical brushless drive motor 10 having an external rotor, which is flanged to the base section 8. Each electrical drive motor 10 comprises a motor shaft 11, which is coupled to the friction roller 6 by means of a gear device. This gear device 12 is arranged inside a corresponding gear housing 13 and located next to the friction roller 6 on the opposite side of the leg 9 shown on the left side in figure 5. In concrete terms, the gear device 12 comprises a worm gear pair 14. In this way, a high transmission ratio can be achieved. A worm screw 15 of the worm gear pair 14 is connected to the motor shaft 11 in a rotationally fixed manner.

The gear device 12 further comprises an intermediate shaft 16, which is mounted rotatably with respect to the gear housing 13 and which carries a worm wheel 17 being in engagement with the worm screw 15. The intermediate shaft 16 also carries a gear wheel 18, wherein the gear wheel 18 and the worm wheel 17 are mounted together via the intermediate shaft 16 in a rotationally fixed manner.

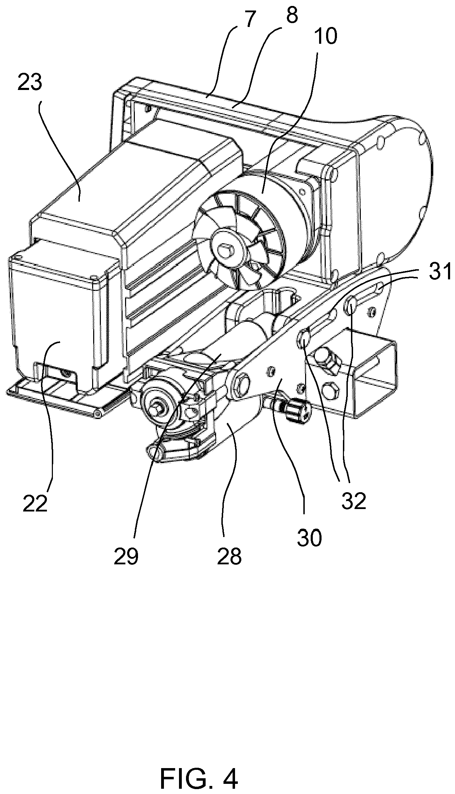

In order to further increase the transmission ratio, the gear device 12 also has a spur gear stage 19. The spur gear stage 19 is formed such that the gear wheel 18 of the intermediate shaft 16 is in indirect engagement with an output side gear wheel 20, which is fixed in a rotationally fixed manner to the friction roller 6. In concrete terms, the spur gear stage comprises an intermediate gear wheel 21 held rotatably on the left side of the gear housing 13 (in figure 5) and arranged between the gear wheel 18 on the intermediate shaft 16 and the output side gear wheel 20. As it is visible in figures 4 and 5, due to the configuration of the gear device 12, the motor axis X defined by the motor shaft 11 extends perpendicularly to the rotation axis of friction roller 6.

Each drive unit further comprises a battery 22, which is designed to be rechargeable, for supplying the drive unit 4 with electrical energy. The battery 22 is designed to supply an electrical voltage for operation of the drive motor 10 of 36 V. Accordingly, the drive motor 10 is designed to be operated at such a voltage. As it is visible in figure 4, the battery 22 is mounted to the central support element 7 from a rear side.

A control device 23 is assigned to each drive unit 4, which is arranged on the top of the respective battery 22. This control device 23 is also fixed to the central support element 7 and is arranged and designed such that it controls the speed and direction of rotation of the drive motor 10 assigned thereto. Furthermore, a communication module is provided, which is able to communicate with a human machine interface connected by wireless connection. Furthermore, the communication module is designed such that the control devices 23 of both drive units 4 can communicate to each other in order to ensure a synchronous rotation of the drive motors 10 of both drive units 4.

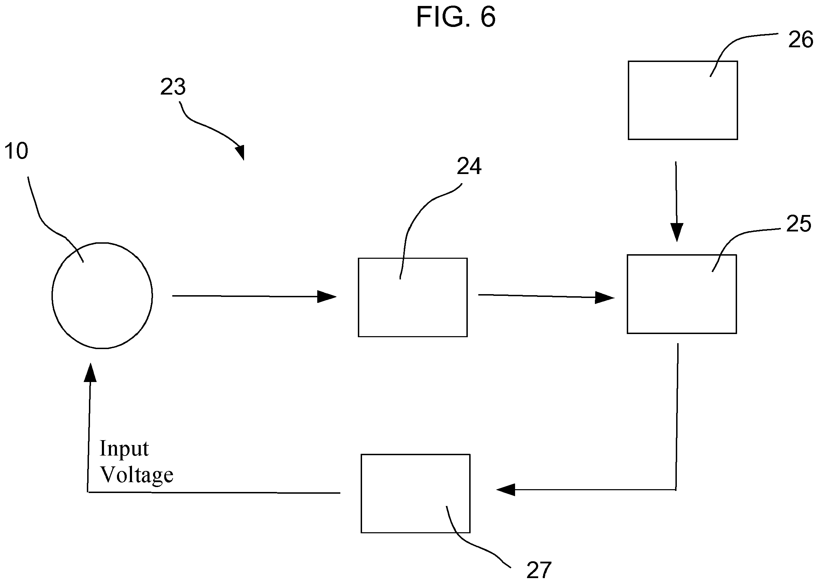

The way the control device 23 operates is shown in figure 6. The control device 23 is designed such that it controls the speed and direction of rotation of the external rotor of the drive motor 10 assigned thereto depending on the voltage measured in three conductors of the drive motor 10, which are named A, B and C in the following. The conductors consisting of an electrically conductive material form windings in order to increase the efficiency. Permanent magnets are provided at the rotor.

A defined voltage can be subsequently applied to the conductors A, B and C. By means of the control device 23, the drive motor 10 can be commutated such that, at any moment, one conductor has a positive voltage, another conductor has a negative voltage and the third conductor has a floating potential, i.e. no defined voltage. The control device 23 is designed to detect the zero- crossing of the potential given in the conductor, in which at the respective moment no voltage is applied.

For this purpose, the control device 23 comprises a pre-processing unit in the form a quad voltage comparator 24. The voltage comparator 24 is connected to each conductor of the drive motor 10. In the period, when no voltage is applied to a conductor, which means that the respective conductor has a floating potential, the voltage comparator 24 detects the zero-crossing, i.e. the moment, when the potential reaches the value zero. For this purpose, the comparator 24 compares the voltage/current of the respective conductor to a reference- voltage having a zero- potential. At this moment, the voltage comparator 24 emits a digital signal to a main processing unit 25, which is able to create, based on the signal received from the voltage operator 24, an output signal by means of which the rotational movement of the rotor can be influenced and controlled. Furthermore, the main processing unit 25 is designed to receive an input signal from a human machine interface, presently in the form of a remote handset 26. For this purpose, the main processing unit comprises a main chip, which is presently a 32 bit chip and has a clock frequency of 48 MHz.

The main processing unit 25 is able to emit digital output signals to a transistor, presently a metal oxide semiconductor field effect transistor (MOSFET) 27. By means of this transistor 27, the voltage supply to the drive motor 10 can be switched and commutated. Accordingly, the transistor 27 receives a pulsed signal from the main processing unit 25, by means of which the voltage is switched to the conductors A, B and C. In other words, the commutation of the conductors is realized via the transistor 27. Due to this a functioning of controlling the drive motor 10, no specific sensors are provided or used, such as hall sensors, which measure directly the position of the rotor, relative to the stator. In this way, from the measurement of the zero-crossing of the conductor having a floating potential the moment or time of commutation can be determined.

In addition, an infeed device 28 is assigned to each drive unit 4. The infeed device 28 is designed such that it can bring the drive unit 4 into a frictional and driving contact between its friction roller and the wheel 6 of the caravan trailer 1. In concrete terms, the infeed device 28 comprises an infeed motor 29, by means of which the infeed movement can be carried out in a motorized manner. The infeed motor 29, which is also designed to be operated at a voltage of 36 V and supplied by the battery 22, is attached to a base plate 30, which is fixed, in particular welded to the square tube 5 and extends perpendicularly to the longitudinal direction of the square tube 5. The drive unit 4 can be moved relative to the base plate 6 and is guided by means of oblong holes 31 formed in the base plate 30. Corresponding guiding bolts 32 extend through these oblong holes 31. In this way, the infeed movement of the drive unit 4 is guided with respect to the square tube 5, which itself is fixed to the caravan trailer 1.

As it is visible on figure 3, each drive unit 4 also comprises a housing 33, which is weather-resistant and watertight. The housing 33 is attached to the central support element 7 and surrounds the drive motor 10, the battery 22, the control device 23 and the infeed motor 29. In this way, these elements are protected against water and dirt. The batteries 22 can be arranged inside the housing such that they are exchangeable. In other words, a mechanism can be provided which allows to replace the battery 22. Furthermore, a charging connection can be provided on the housing 33 in order to charge the battery 22 from outside. Such a charging connection may comprise two charging poles.

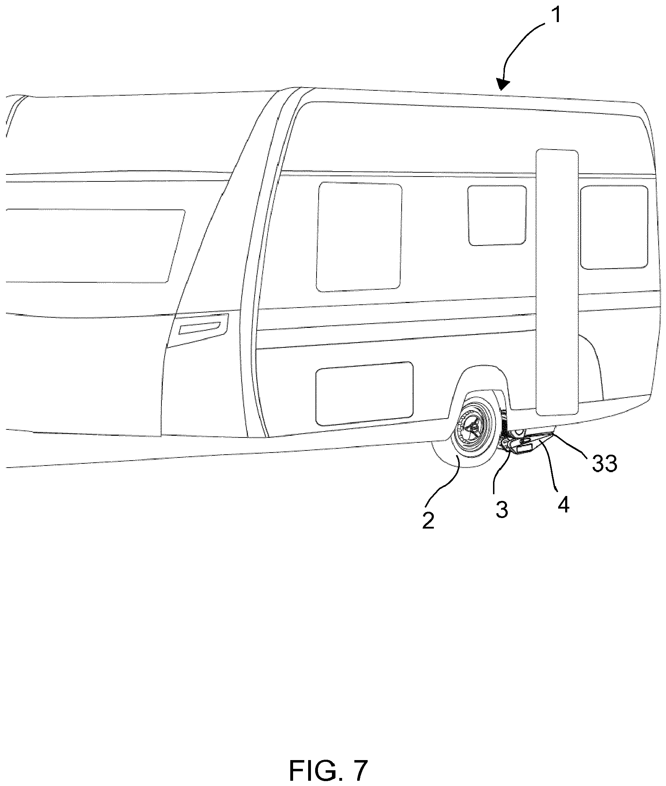

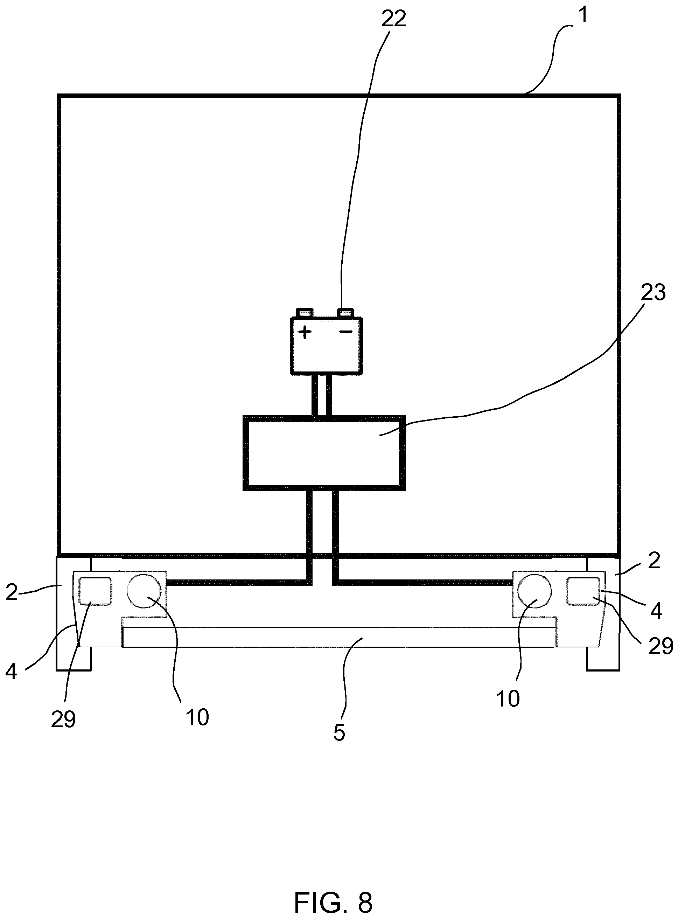

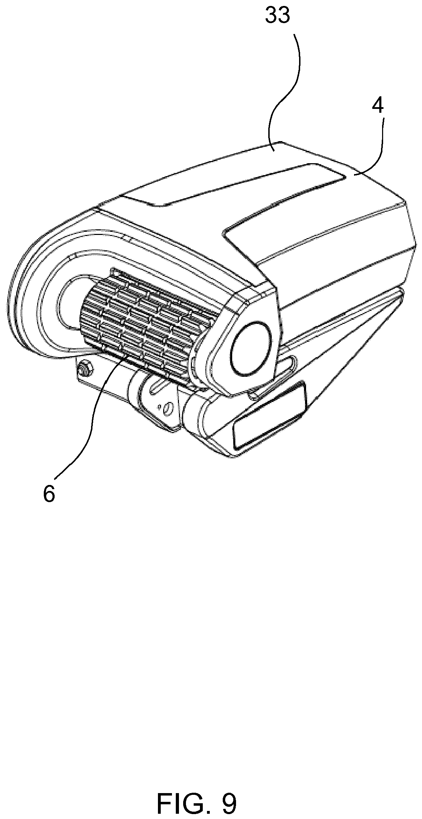

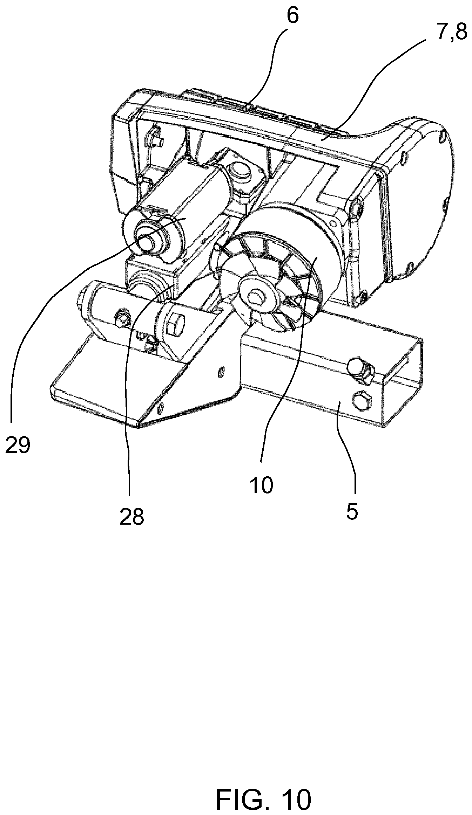

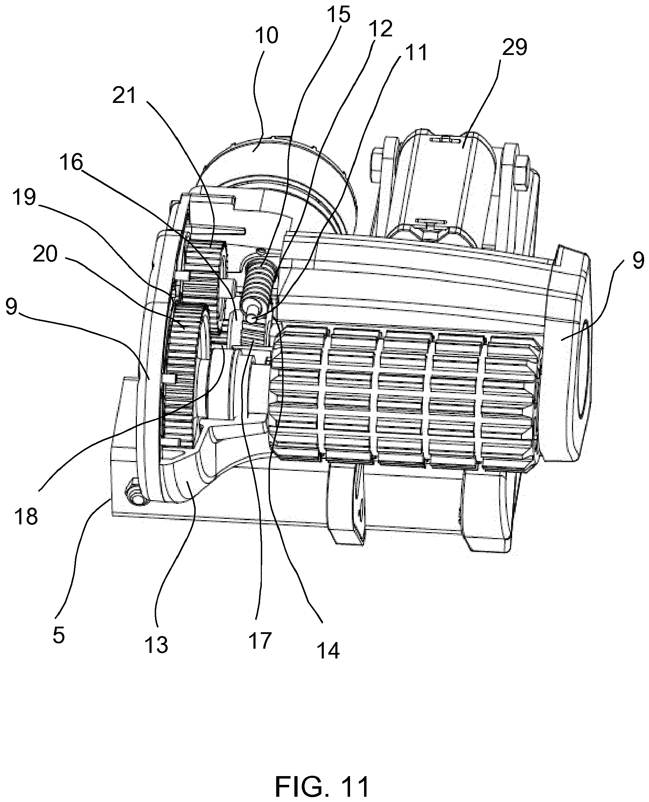

Another embodiment of a maneuvering drive system according to the invention is shown in figures 7 to 11. This maneuvering drive system 1 differs from the previously described in that one "central" control device 23 is assigned to all drive motors 10. Accordingly, the control device 23 is designed to control both drive motors 10 in the way described in context with the first embodiment. Accordingly, components like the pre- processing unit, the main processing unit 25 and the transistor 27 are designed and arranged to cooperate and to interact with two drive motors 10.

Furthermore, one central battery 22 is provided which supplies both drive units 4 with electrical energy. In this way, the drive units 4 are more compact than those of the first embodiment, but space for the central control unit 23 and the battery 22 at the caravan trailer 1 as well as connecting cables are necessary.

The way to control the drive units 10 without specific sensor elements, but only by measuring an electrical parameter of the conductors leads to a very efficient and cost-effective design of the drive units 4, in particular in combination with a brushless motor having an external rotor, which is operated at a voltage of 36 V.

**List of reference numbers**

| | | | |
|---|---|---|---|
| 1 | caravan trailer | 29 | infeed motor |
| 2 | wheel | 30 | base plate |
| 3 | maneuvering drive system | 31 | oblong hole |
| 4 | drive unit | 32 | guiding bolt |
| 5 | square tube | 33 | housing |
| 6 | friction roller | | |
| 7 | central support element | | |
| 8 | base section | | |
| 9 | leg | | |
| 10 | drive motor | | |
| 11 | motor shaft | | |
| 12 | gear device | | |
| 13 | gear housing | | |
| 14 | worm gear pair | | |
| 15 | worm screw | | |
| 16 | intermediate shaft | | |
| 17 | worm wheel | | |
| 18 | gear wheel | | |
| 19 | spur gear stage | | |
| 20 | output side gear wheel | | |
| 21 | intermediate gear wheel | | |
| 22 | battery | | |
| 23 | control device | | |
| 24 | voltage comparator | | |
| 25 | main processing unit | | |
| 26 | handset | | |
| 27 | transistor | | |
| 28 | infeed device | | |

## Claims

1. Maneuvering drive system (3) for a vehicle, in particular for a vehicle without its own drive, preferably for a trailer, comprising at least two, in particular exactly two drive units (4), which are designed to be attached to a vehicle in order to drive a wheel (2) of the vehicle, each drive unit (4) comprising
a rotatably mounted drive element, which is designed and arranged such that it can be brought into abutment with a wheel (2) of the vehicle to drive the vehicle,
an electrical drive motor (10) designed to set the drive element in rotation and having a plurality of conductors,
wherein at least one control device (23) is provided, which control device (23) is arranged and designed such that it controls the speed and direction of rotation of the rotor of at least one drive motor (10) assigned thereto, **characterized in that** no sensor elements, such as hall-sensors, which are designed and arranged to detect directly the current position of the rotors of the drive motors (10), are provided.

2. Maneuvering drive system (3) according to claim 1, **characterized in that** each control device (23) is arranged and designed such that it controls the speed and direction of rotation of the rotor of at least one drive motor (10) assigned thereto depending on at least one electrical parameter, in particular exactly one electrical parameter, preferably the voltage or current, in the conductors of the assigned drive motor(s) (10) measured when the drive motor(s) (10) is/are in operation.

3. Maneuvering drive system (3) according to claim 2, **characterized in that** each control device (23) is arranged and designed to detect the zero-crossing of the voltage/current given in the conductor, in which at the respective moment no voltage is applied, of the assigned drive motor(s) (10) in order to control the speed and direction of rotation of the rotor(s) of the assigned drive motor(s) (10).

4. Maneuvering drive system (3) according to any of the preceding claims, **characterized in that** one control device (23) is assigned to each drive motor (10), or **in that** one control device (23) is assigned to a plurality of drive motors (10), in particular to all drive motors (10).

5. Maneuvering drive system (3) according to any of the preceding claims, **characterized in that** each control device (23) comprises a pre-processing unit, which is able to measure the voltage or current given in the conductors of the drive motor (10) and creates an output signal, in particular a digital output signal, dependent on the measured voltage/current, wherein, in particular, the pre- processing unit comprises a comparator, preferably a voltage comparator (24).

6. Maneuvering drive system (3) according to any of the preceding claims, **characterized in that** each control device (23) comprises a main processing unit (25), which is able to receive a signal indicating an operation parameter, in particular indicating the voltage or current given in the conductors of the drive motor (10), preferably indicating the zero- crossing of the voltage, and to create, based on the signal, an output signal by means of which the rotational movement of the rotor can be influenced and/or controlled.

7. Maneuvering drive system (3) according to claim 6, **characterized in that** the main processing unit (25) is designed to receive an input signal from a human machine interface, in particular from a handset (26), preferably from a remote handset (26), and to process this input signal.

8. Maneuvering drive system (3) according to claim 6 or 7, **characterized in that** the main processing unit (25) comprises a main chip, wherein, in particular, the main chip is a 32 bit chip or a 64 bit chip, and/or the main chip has a clock frequency of less than 100 MHz, preferably of less than 60 MHz, and/or of more than 1 MHz, preferably of more than 5 MHz, more preferably of more than 25 MHz, particularly preferably a clock frequency of 48 MHz, and/or the main chip has a flash memory of more than 16 kB and/or of less than 256 kB, and/or the main chip is designed and arranged such that it can emit a digital output signal in order to control the drive motor (10).

9. Maneuvering drive system (3) according to any of the preceding claims, **characterized in that** each control device further comprises a transistor (27), in particular a field effect transistor, preferably a metal oxide semiconductor field effect transistor (MOSFET), which is designed and arranged to control the input supply voltage, in particular a pulsed supply voltage, of the drive motor based on a signal, in particular a digital signal, preferably received from the main processing unit.

10. Maneuvering drive system (3) according to any of the preceding claims, **characterized in that** each drive unit (4) further comprises a battery (22), which is in particular designed to be rechargeable, for supplying the drive unit (4) with electrical energy, and/or **in that** the drive motors are a 3-phase motors and/or DC-motor(s), and/or **in that** the drive motors are brushless motors, and/or **in that** the drive motors have an external rotor.

11. Vehicle, in particular a vehicle without its own drive, comprising a maneuvering drive system (3) according to any of the preceding claims.

12. Method for controlling a maneuvering drive system (3) according to any of claims 1 to 10, wherein each control device (23) measures an electrical parameter, preferably the voltage or current in the conductors of the assigned drive motor(s) (10), when the drive motor(s) (10) is/are in operation, and controls the speed and direction of rotation of the rotor(s) depending on the measured parameter.

13. Method according to claim 12, **characterized in that** each control device (23) detects the zero- crossing of the voltage/current given in the conductor, in which at the respective moment no voltage is applied, of the assigned drive motor(s) (10) and controls the direction and speed of rotation of the rotor(s) of the assigned drive motor(s) based on this measurement.

14. Method according to claim 12 or 13, **characterized in that** no sensor elements, such as hall-sensors, are used to detect directly the current position of the rotors of the drive motors (10), and/or **in that** each control device (23) comprises a pre- processing unit, which measures the voltage/ potential given in at least one conductor of the assigned drive motor(s) (10) and emits an output signal, in particular a digital output signal, dependant on the measured voltage/current, wherein, in particular, the pre- processing unit comprises at least one comparator (24) and the voltage/ potential given in the conductor is compared to a reference voltage/ potential, preferably to a zero-potential.

15. Method according to any of claims 12 to 14, **characterized in that** each control device (23) comprises a main processing unit (25), which receives a signal indicating an operation parameter, in particular a signal indicating the voltage/current given in the conductors of the drive motor(s) (10), preferably indicating the zero- crossing of the voltage/current, and creates - based on this signal - an output signal which influences and/ or controls the rotational movement of the rotor, wherein, in particular, the main processing unit (25) emits a digital output signal in order to control the drive motor (10), and/or **in that** each control device (23) further comprises a transistor (27), in particular a field effect transistor (27), preferably a metal oxide semiconductor field effect transistor (27) (MOSFET), which controls the input supply voltage, in particular a pulsed supply voltage, of the drive motor(s) (23) assigned thereto based on a signal, in particular a digital signal, preferably received from the main processing unit.
